# EUROPÄISCHE PATENTSCHRIFT

(11) **EP 3 263 780 B1**
(45) Veröffentlichungstag und Bekanntmachung des Hinweises auf die Patenterteilung: **04.03.2020**
(21) Anmeldenummer: 17176908.6
(22) Anmeldetag: 20.06.2017
(51) Int. Cl.: E03C 1/02, H02G 3/12

(54) **UNTERPUTZ-BAUGRUPPE**
BUILT IN CONSTRUCTION GROUP
MODULE ENCASTRÉ

(30) Priorität: 28.06.2016 DE 102016007794
(43) Veröffentlichungstag der Anmeldung: 03.01.2018
(73) Patentinhaber: Grohe AG, 58675 Hemer (DE)
(72) Erfinder: Lobermeier, Hans, 58708 Menden (DE)

(56) Entgegenhaltungen:
- EP-A1- 3 150 769
- DE-A1- 4 241 989
- DE-A1-102004 060 744
- US-B1- 7 528 322

## Beschreibung

Die Erfindung betrifft eine Baueinheit mit einer Unterputz-Baugruppe zum Verbau an einer Installationswand gemäß dem Oberbegriff des Patentanspruches 1.

Eine solche Unterputz-Baugruppe kann Bestandteil eines elektrischen oder elektronischen Gerätes sein oder als eine Unterputz-Sanitärarmatur realisiert sein. Die Unterputz-Baugruppe bildet zusammen mit einem Unterputz-Gehäuse, das die Unterputz-Baugruppe umschließt, die Baueinheit, die in einer Montagevertiefung der Installationswand in der Bautiefenrichtung montierbar ist. In der Einbaulage kann das Unterputz-Gehäuse mit einem Montageboden der Montagevertiefung verschraubt sein, der um die oben erwähnte Einbautiefe von der Installationswand-Oberfläche zurückgesetzt ist.

Ein gattungsgemäßes Unterputz-Gehäuse ist üblicherweise als ein, zum Beispiel zylindrisches oder topfförmiges Kunststoff-Hohlprofilteil realisiert. Das Unterputz-Gehäuse wird für den Verbau in Installationswänden vorgehalten, die unterschiedliche Wandstärken aufweisen können. Entsprechend können auch die Montagevertiefungen jeweils unterschiedliche Einbautiefen aufweisen. Aufgrund der unterschiedlichen Wandstärken bzw. Einbautiefen sind bei der Unterputz-Montage Bauteil- oder Montagetoleranzen zu berücksichtigen.

Aufgrund der oben erwähnten Bauteil- und Montagetoleranzen kann das in montierte Unterputz-Gehäuse in der Bautiefen-Richtung die Installationswand in den Wohnraum hinein mit einem Überstand überragen. Im Stand der Technik wird dieser Überstand fertigungstechnisch aufwendig mittels einer Säge oder eines Schneidmessers abgelängt. Das Ablängen wird vorausschauend auf den noch folgenden Wandbelag (Putz, Fliesen, etc.) durchgeführt. Hierbei ist ein Messfehler möglich, der die Montagequalität beeinträchtigt oder zu einem Austausch des Unterputz-Gehäuses führen kann. Ein solches fehlerhaftes Ablängen des Unterputz-Gehäuses kann außerdem zu einem schlechten Dichtungsergebnis des Unterputz-Gehäuses zur Installationswand führen.

Eine einwandfreie Unterputz-Montage erfolgt daher im Stand der Technik montagetechnisch aufwändig mit mehreren Installationsschritten sowie unter Erzeugung von Materialausschuss.

Die Druckschriften DE 42 41 989 A und DE 10 2004 060 744 A zeigen einteilige Unterputz-Gehäuse mit einem Faltebalg zur Anpassung an die Einbautiefe und mit einem Dichtlappen zur raumseitigen Abdichtung. Die Aufgabe der Erfindung besteht darin, eine alternative Unterputz-Baugruppe bereitzustellen, die in montagetechnisch einfacher Weise sowie materialsparend unterschiedliche Einbautiefen in Installationswänden ausgleichen kann.

Die Aufgabe ist durch die Merkmale des Patentanspruches 1 gelöst. Bevorzugte Weiterbildungen der Erfindung sind in den Unteransprüchen offenbart.

Das erfindungsgemäße Unterputz-Gehäuse weist eine Ausgleichseinheit auf, mit der die Bauhöhe des Unterputz-Gehäuses in der Bautiefenrichtung einstellbar ist. Bei der Unterputz-Montage kann daher mit Hilfe der Ausgleichseinheit die Bauhöhe des Unterputz-Gehäuses an eine Einbautiefe der Montagevertiefung der Installationswand angepasst werden. Auf diese Weise wird ein Überstand des in der Montagevertiefung befestigten Unterputz-Gehäuses in Richtung auf den Wohnraum vermieden. Bei der Unterputz-Montage wird mittels der Ausgleichseinheit lediglich eine werkzeugfreie Längenanpassung des Unterputz-Gehäuses vorgenommen, und zwar ohne zusätzliche Werkzeuge (das heißt Säge oder Schneidmesser). Ein vorausschauendes Messen des bauseits noch folgenden Wandbelags (das heißt Putz, Fliesen, etc.) ist daher nicht mehr erforderlich. Auf diese Weise ergibt sich ein im Vergleich zum Stand der Technik wesentlich vereinfachter Einbauprozess, ohne dass ein Materialausschuss entsteht.

In einer technischen Umsetzung kann die Ausgleichseinheit materialeinheitlich und/oder einstückig im Unterputz-Gehäuse ausgebildet sein. Für eine einfache Bauhöhen-Anpassung kann die Ausgleichseinheit bevorzugt in einer zur Bautiefenrichtung rechtwinkligen Ebene umfangsseitig durchgängig im Unterputz-Gehäuse ausgebildet sein.

In einer bevorzugten Ausführungsvariante kann die Ausgleichseinheit als ein Verformungssegment realisiert sein, das in der Bautiefenrichtung plastisch oder elastisch verformbar ist. Das Verformungssegment kann zusammen mit einem, zumindest in der Bautiefenrichtung bauteilsteifen Gehäusesegment das Unterputz-Gehäuse bilden. Am bauteilsteifen Gehäusesegment kann bevorzugt die Unterputz-Baugruppe, zum Beispiel die Sanitärarmatur, befestigt sein. Demgegenüber kann die Unterputz-Baugruppe gegenüber dem Verformungssegment anbindungsfrei sein, um eine bei der Unterputz-Montage erforderliche Bauhöhen-Anpassung in der Bautiefenrichtung nicht zu beeinträchtigen.

Die Montagevertiefung kann einen Montageboden aufweisen, der um die oben erwähnte Einbautiefe von der Installationswand/Oberfläche zurückgesetzt ist. In der Einbaulage kann das Unterputz-Gehäuse, zum Beispiel durch Verschraubung, am Montageboden der Montagevertiefung der Installationswand angebunden sein. Hierzu kann das Unterputz-Gehäuse einen Befestigungsabschnitt aufweisen, der bevorzugt am bauteilsteifen Gehäusesegment des Unterputz-Gehäuses ausgebildet ist, zum Beispiel als eine radial nach außen abragende Befestigungskonsole.

In einer besonders bevorzugten Ausführungsvariante kann das Verformungssegment als ein Faltenbalg realisiert sein, der in der Bautiefenrichtung ziehharmonikaartig zusammengezogen bzw. auseinandergezogen werden kann, um die Bauhöhe des Unterputz-Gehäuses zu variieren.

Erfindungsgemäß ist das Unterputz-Gehäuse zur Installationswand gegen Undichtigkeiten der Armatur oder gegenüber Kondenswasser flüssigkeitsdicht abgedichtet. Hierzu weist das Unterputz-Gehäuse einen Dichtkranz auf. Dieser fasst in der Einbaulage des Unterputz-Gehäuses einen die Montagevertiefung randseitig begrenzenden Wandausschnitt der Installationswand übergreifen und/oder flüssigkeitsdicht ein. Der Dichtkranz kann scheibenförmig ausgebildet sein und an einer, dem Montageboden der Montagevertiefung gegenüberliegenden Stirnseite des Unterputz-Gehäuses befestigt sein sowie gegenüber dem Unterputz-Gehäuse radial ausgeweitet sein, und zwar unter Bildung eines Inneneckbereiches zwischen dem Unterputz-Gehäuse und dem Dichtkranz, das den Wandausschnitt der Installationswand flüssigkeitsdicht einfasst.

Der Dichtkranz kann in dichtenden Bereichen geschlossen sein und radial außen einen Montagebereich aufweisen. Dieser kann zur Erhöhung der Verbindungsfestigkeit perforiert ausgeführt sein. In der Einbaulage kann der Dichtkranz beispielhaft mit dem Wandbelag, zum Beispiel Fliesen, über einen Fliesenmörtel verklebt sein.

Bevorzugt ist der Faltenbalg (oder allgemeiner die Ausgleichseinheit) sowie das bauteilsteife Gehäusesegment als ein materialeinheitliches und/oder einstückiges Verbundsystem ausgebildet.

Bevorzugt ist das bauteilsteife Gehäusesegment und der Faltenbalg (oder allgemeiner das Verformungssegment) materialeinheitlich und/oder einstückig aus einem Ein-oder Mehrkomponentenkunststoff hergestellt.

Erfindungsgemäß ist der Dichtkranz ein separates Bauteil, zum Beispiel ein Dichtvlies. Der Dichtkranz ist mittels eines Befestigungsclips, zum Beispiel ein geteilter Klemmring, nachträglich außenseitig am Unterputz-Gehäuse befestigt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Teilschnittdarstellung eine an einer Installationswand installierte Unterputz-Sanitärarmatur in einer ersten Einbaulage;
- Fig. 2: eine Seitenansicht des Unterputz-Gehäuses aus der Fig. 1 gemäß einer nicht beanspruchten Ausführungsform;
- Fig. 3: in einer perspektivischen Ansicht ein Unterputz-Gehäuse in Alleinstellung, gemäß einer nicht beanspruchten Ausführungsform;
- Fig. 4: das Unterputzgehäuse in einer Seitenansicht, gemäß einer nicht beanspruchten Ausführungsform;
- Fig. 5: in einer Ansicht entsprechend der Fig. 1 das Unterputz-Gehäuse in einer zweiten Einbaulage, gemäß einer nicht beanspruchten Ausführungsform;
- Fig. 6: ein Unterputz-Gehäuse gemäß einem erfindungsgemäßen Ausführungsbeispiel; und
- Fig. 7: ein Klemmring zur Befestigung eines Dichtmittels an dem in der Fig. 6 gezeigten Unterputz-Gehäuse.

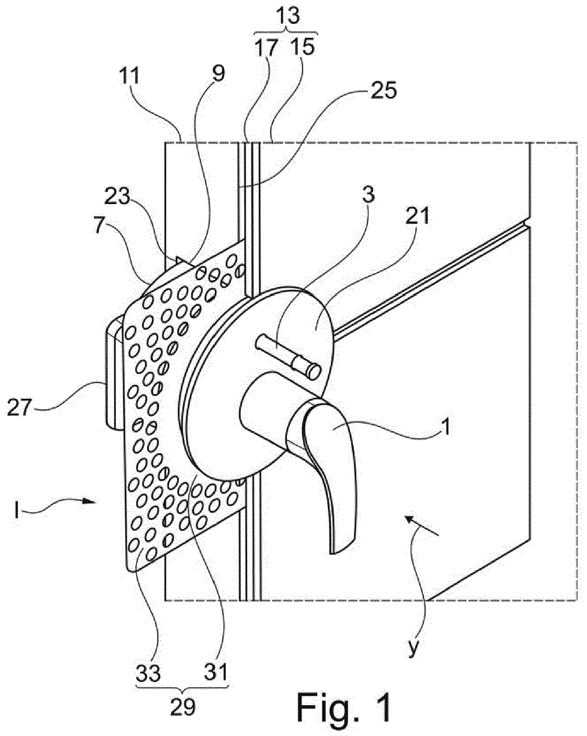

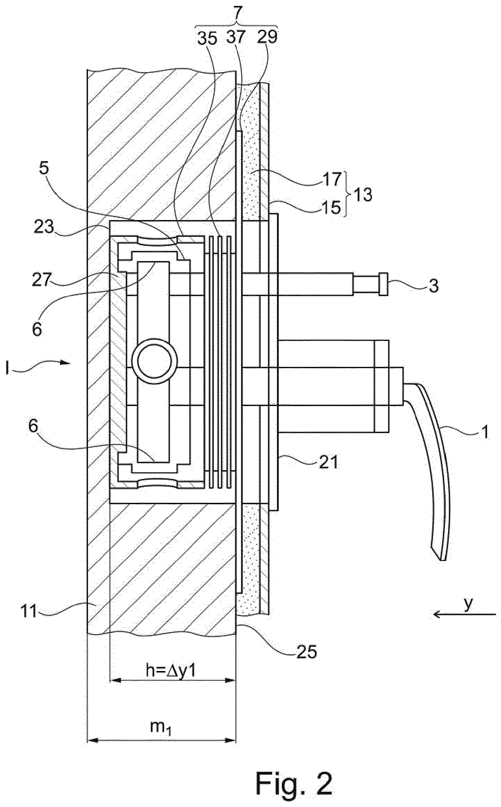

In der Fig. 1 ist eine Unterputz-Sanitärarmatur für zum Beispiel eine Badewanne in einer ersten Einbaulage I gezeigt. Die Unterputz-Sanitärarmatur weist in der Fig. 1 ein erstes Bedienelement 1 zur Temperatur- und/oder Mengeneinstellung von Frischwasser und ein druckknopfartiges Bedienelement 3 zur Umstellung eines Wasserzulaufes auf. Die beiden Bedienelemente 1, 3 sind in Wirkverbindung mit einem Armaturenkörper 5 (Fig. 2), der Kalt- und Warmwassereinlässe 6 (Fig. 2) aufweist, an denen Kalt- und Warmwasserleitungen anschließbar sind.

In der Fig. 1 und 2 ist der Armaturenkörper 5 von einem zum Beispiel hohlzylindrischen oder topfförmigen Unterputz-Gehäuse 7 umschlossen. Das Unterputz-Gehäuse 7 bildet zusammen mit dem Armaturenkörper 5 eine Baueinheit, die in eine Montagevertiefung 9 einer Gebäudewand 11 eingesetzt ist. Die Gebäudewand 11 weist auf ihrer, dem Wohnraum zugewandten Seite einen Wandbelag 13 auf, der in der Fig. 1 oder 2 aus Fliesen 15 besteht, die über einen Fliesenmörtel 17 mit der Gebäudewand 11 verklebt sind. Der die Montagevertiefung 9 begrenzende Wandausschnitt ist in der Fig. 1 oder 2 von einer Rosette 21 überdeckt, die spritzwasserdicht auf den Fliesen 15 in Anlage ist und durch die die beiden Bedienelemente 1, 3 geführt sind.

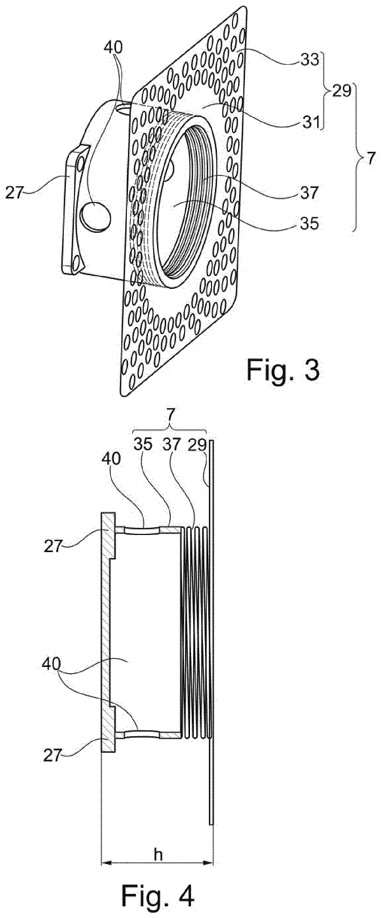

In der Fig. 2 ist die Unterputz-Sanitärarmatur in der ersten Einbaulage I in Seitenansicht gezeigt. Demzufolge weist die Montagevertiefung 9 einen Montageboden 23 auf, der um eine erste Einbautiefe Δy₁ von einer Gebäudewand-Oberfläche 25 zurückgesetzt ist. Das Unterputz-Gehäuse 7 weist an seiner dem Montageboden 23 zugewandten Seite einen Befestigungsabschnitt 27 in Form einer Befestigungskonsole auf, die über nicht gezeigte Schraubverbindungen am Montageboden 23 befestigt sind. An seiner, in der Bautiefenrichtung y gegenüberliegenden Seite weist das Unterputz-Gehäuse 7 einen Dichtkranz 29 auf, der gegenüber dem hohlzylindrischen Unterputz-Gehäuse 7 radial ausgeweitet ist sowie scheibenförmig ausgeführt ist. Der Dichtkranz 29 weist gemäß der Fig. 3 eine radial innere, geschlossenflächige Dichtzone 31 sowie eine daran anschließende, radial äußere perforierte Montagezone 33 auf. Die radial innere Dichtzone 31 des Dichtkranzes 29 spannt mit dem Außenumfang des hohlzylindrischen Unterputz-Gehäuses einen Inneneckbereich auf, der den Öffnungsrand der Montagevertiefung 9 flüssigkeitsdicht einfasst. Die radial äußere, perforierte Montagezone 33 ist dagegen verbindungsfest mit dem Fliesenmörtel 17 verklebt. In der ersten Einbaulage I (Fig. 2) weist das Unterputz-Gehäuse 7 in der Bautiefenrichtung y betrachtet eine Bauhöhe h₁ auf, die identisch ist mit der ersten Einbautiefe Δy₁.

Das Unterputz-Gehäuse 7 ist in der Fig. 3 und 4 jeweils in unterschiedlichen Ansichten in Alleinstellung gezeigt. Demzufolge ist das Unterputz-Gehäuse 7 als ein Verbundsystem realisiert, das aus einem Ein- oder Mehrkomponentenkunststoff hergestellt ist. So weist das hohlzylindrische Unterputz-Gehäuse 7 in der Fig. 4 ein bauteilsteifes Gehäusesegment 35 auf, an das sich ein Faltenbalgsegment 37 anschließt. Das Faltenbalgsegment 37 geht materialeinheitlich und einstückig in den Dichtkranz 29 über. Am bauteilsteifen Gehäusesegment 35 sind die oben erwähnten Befestigungsabschnitte 27 ausgebildet. Zudem weist das bauteilsteife Gehäusesegment 35 Durchlassöffnung 40 auf, durch die die Warm- und Kaltwasserleitungen zum Armaturenkörper 5 führbar sind. Das Faltenbalgsegment 37 wirkt bei der Unterputz-Montage als eine Ausgleichseinheit, mit der die Bauhöhe h des Unterputz-Gehäuses 7 in der Bautiefenrichtung y einstellbar ist. Auf diese Weise kann bei der Unterputz-Montage die Bauhöhe h des Unterputz-Gehäuses 7 werkzeugfrei an unterschiedliche Einbautiefen Δy der Montagevertiefung 9 der Gebäudewand 11 angepasst werden. Hierzu ist das Faltenbalgsegment 37 in der Bautiefenrichtung y ziehharmonikaartig zusammen- und auseinanderziehbar.

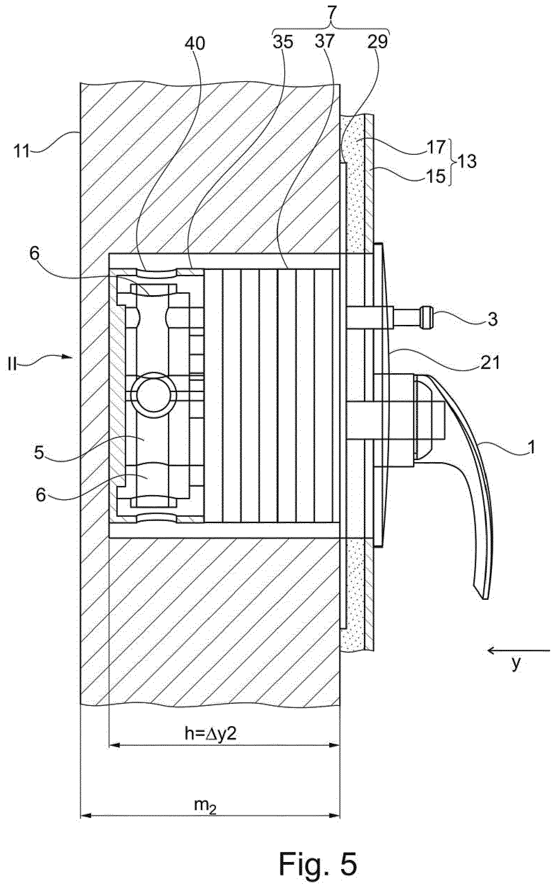

Das Unterputz-Gehäuse 7 kann daher zum Einbau in Montagevertiefungen 9 vorgehalten werden, die unterschiedliche Einbautiefen Δy₁ (Fig. 2)und Δy₂ (Fig. 5) aufweisen. Beispielhaft ist in der Fig. 5 das Unterputz-Gehäuse 7 in einer zweiten Einbaulage II gezeigt, bei der die Montagevertiefung 9 die im Vergleich zur Fig. 2 wesentlich größere Einbautiefe Δy₂ aufweist. Zum Ausgleich dieser unterschiedlichen Bautiefen, ist in der Fig. 5 das Faltenbalgsegment 37 in der Bautiefenrichtung y auseinandergezogen. In der zweiten Einbaulage II (Fig. 5) weist das Unterputz-Gehäuse 7 daher, in der Bautiefenrichtung y betrachtet, eine Bauhöhe h auf, die identisch ist mit der zweiten Einbautiefe Δy₂.

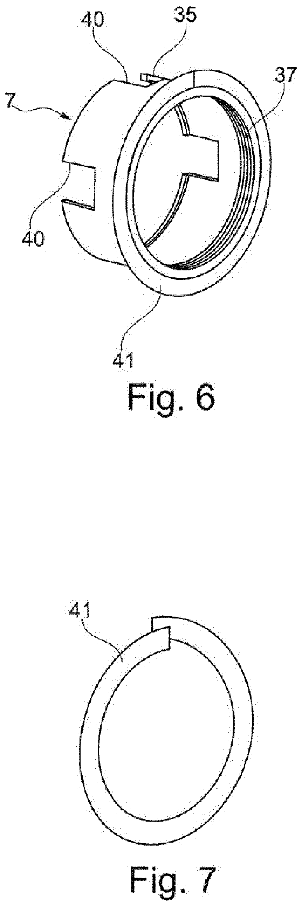

Wie oben erwähnt, ist in den Fig. 1 bis 5 das Unterputz-Gehäuse 7 als ein Verbundsystem ausgeführt, bei dem der Dichtkranz 29, das Faltenbalgsegment 37 und das bauteilsteife Gehäusesegment 35 materialeinheitlich und einstückig aus einem Ein- oder Mehrkomponentenkunststoff hergestellt sind. Diese Ausführungsform ist nicht beansprucht. Im Unterschied dazu zeigt Fig. 6 eine erfindungsgemäße Baueinheit. Dabei ist das bauteilsteife Gehäusesegment 35 und das Faltenbalgsegment 37 materialeinheitlich ausgeführt, während der nicht dargestellte Dichtkranz 29 als ein separates Bauteil gefertigt ist. Der Dichtkranz ist ein Dichtvlies, das mittels eines geteilten Klemmrings 41 außenseitig am hohlzylindrischen Unterputz-Gehäuse 7 befestigt ist. Während der Unterputz-Montage kann das biegeschlaffe Dichtvlies innerhalb des Faltenbalgsegments 37 angeordnet sein, um den Innenraum des Unterputz-Gehäuses 7 vor Bauschmutz zu schützen.

Die Erfindung ist nicht auf die obigen beiden Ausführungsbeispiele beschränkt. Alternativ zu dem in den Figuren gezeigten Faltenbalgsegments 37 kann die Ausgleichseinheit auch zum Beispiel aus zwei in der Bautiefenrichtung zueinander teleskopartig verschiebbaren bauteilsteifen Gehäusesegmenten 35 ausgeführt sein. Außerdem ist das Unterputz-Gehäuse 7 nicht auf die hohlzylindrische Profilform beschränkt, sondern kann vielmehr auch als ein Mehrkantprofil ausgeführt sein.

### Bezugszeichenliste

- 1, 3: Bedienelemente
- 5: Armaturenkörper
- 6: Kalt- und Warmwassereinlässe
- 7: Unterputz-Gehäuse
- 9: Montagevertiefung
- 11: Gebäudewand
- 13: Wandbelag
- 15: Fliesen
- 17: Fliesenmörtel
- 21: Rosette
- 23: Montageboden
- 25: Gebäudewand-Oberfläche
- 27: Befestigungsabschnitt
- 29: Dichtkranz
- 31: Dichtzone
- 33: Montagezone
- 35: bauteilsteifes Gehäusesegment
- 37: Ausgleichseinheit, Verformungs- oder Faltenbalgsegment
- 40: Durchlassöffnungen
- 41: geteilter Klemmring
- I, II: erste und zweite Einbaulage
- y: Bautiefenrichtung
- Δy₁, Δy₂: erste und zweite Einbautiefe
- h: Bauhöhe

## Patentansprüche

1. Baueinheit zum Verbau an einer Installationswand (11), mit einer Unterputz-Baugruppe und einem, die Unterputz-Baugruppe umschließenden Unterputz-Gehäuse (7), das bei einer Unterputz-Montage in einer Bautiefenrichtung (y) in eine Montagevertiefung (9) der Installationswand (11) einsetzbar ist, wobei das Unterputz-Gehäuse (7) eine Ausgleichseinheit (37) aufweist, mit der die Bauhöhe (h) des Unterputz-Gehäuses (7) in der Bautiefenrichtung (y) einstellbar ist, so dass bei der Unterputz-Montage die Bauhöhe (h) des Unterputzgehäuses (7) an eine Einbautiefe (Δy) der Montagevertiefung (9) der Installationswand (11) anpassbar ist,
wobei das Unterputz-Gehäuse (7) einen Dichtkranz (29) aufweist, der in der Einbaulage (I,II) des Unterputz-Gehäuses (7) einen die Montagevertiefung (9) randseitig begrenzenden Wandausschnitt der Installationswand (11) übergreift und/oder flüssigkeitsdicht einfasst, **dadurch gekennzeichnet, dass**
der Dichtkranz (29) ein separates Bauteils ist,
wobei der Dichtkranz (29) als Dichtvlies ausgebildet ist, und
mittels eines Befestigungsclips (41) außenseitig am Unterputz-Gehäuse (7) befestigt ist.

2. Baueinheit nach Anspruch 1, **dadurch gekennzeichnet, dass** die Ausgleichseinheit (37) materialeinheitlich und/oder einstückig als Teil des Unterputz-Gehäuses (7) ausgebildet ist, und/oder dass die Ausgleichseinheit (37) in einer zur Bautiefenrichtung (y) rechtwinkligen Ebene umfangsseitig durchgängig als Teil des Unterputz-Gehäuses (7) ausgebildet ist.

3. Baueinheit nach Anspruch 1 oder 2, **dadurch gekennzeichnet, dass** die Ausgleichseinheit (37) als ein Verformungssegment ausgeführt ist, das in der Bautiefenrichtung (y) plastisch oder elastisch verformbar ist, und dass insbesondere das Verformungssegment zusammen mit einem zumindest in der Bautiefenrichtung (y) bauteilsteifen Gehäusesegment (35) das Unterputz-Gehäuse (7) bildet.

4. Baueinheit nach Anspruch 3, **dadurch gekennzeichnet, dass** das Unterputz-Gehäuse (7) einen Befestigungsabschnitt (27) aufweist zur Befestigung an einem Montageboden (23) in der Montagevertiefung (9), welcher Montageboden (23) um die Einbautiefe (Δy) von der Installationswand-Oberfläche (25) zurückgesetzt ist, und dass der Befestigungsabschnitt (27) am bauteilsteifen Gehäusesegment (35) des Unterputz-Gehäuses (7) ausgebildet ist.

5. Baueinheit nach einem der vorhergehenden Ansprüche, **dadurch gekennzeichnet, dass** die Ausgleichseinheit (37) als ein Faltenbalg realisiert ist, der in der Bautiefenrichtung (y) zusammen- oder auseinanderziehbar ist.

6. Baueinheit nach einem der Ansprüche 3 bis 5, **dadurch gekennzeichnet, dass** das bauteilsteife Gehäusesegment (35) und das Verformungssegment (37) materialeinheitlich aus einem Ein- oder Mehrkomponentenkunststoff hergestellt sind.

## Claims

1. An assembly for installation on a support wall (11), having a built-in construction group and a built-in housing (7) enclosing said built-in construction group, which housing can be inserted in a mounting recess (9) of the support wall (11) in an installation depth direction (y) during a flush-mounting process, the built-in housing (7) having a compensation unit (37) with which the overall height (h) of the built-in housing (7) is adjustable in the installation depth direction (y) such that during the flush-mounting process, the overall height (h) of the built-in housing (7) can be adapted to an installation depth (Δy) of the mounting recess (9) of the support wall (11),
the built-in housing (7) having a sealing collar (29), which in the installed position (I, II) of the built-in housing (7) overlaps and/or surrounds, in a fluid-tight manner, a wall section of the support wall (11) delimiting the mounting recess (9) on the edge,
**characterized in that** the sealing collar (29) is a separate component,
wherein the sealing collar (29) is configured as sealing fleece and is attached to the built-in housing (7), on the outside thereof, by means of an attachment clip (41).

2. The assembly according to Claim 1, **characterized in that** the compensation unit (37) is formed of the same material and/or integrally as part of the built-in housing (7), and/or that the compensation unit (37) is formed in a circumferentially continuous manner as part of the built-in housing (7), in a plane perpendicular to the installation depth direction (y).

3. The assembly according to Claim 1 or 2, **characterized in that** the compensation unit (37) is configured as a deformation segment, which is plastically or elastically deformable in the installation depth direction (y), and that in particular the deformation segment forms the built-in housing (7) jointly with a housing segment (35) which is rigid, at least in the installation depth direction (y).

4. The assembly according to Claim 3, **characterized in that** the built-in housing (7) has an attachment section (27) for attachment to a mounting surface (23) in the mounting recess (9), which mounting surface (23) is recessed by the installation depth (Δy) from the support wall surface (25), and that the attachment section (27) is formed on the rigid housing segment (35) of the built-in housing (7).

5. The assembly according to any one of the preceding claims, **characterized in that** the compensation unit (37) is configured as a bellows, which is compressible or extendable in the installation depth direction (y).

6. The assembly according to any one of Claims 3 to 5, **characterized in that** the rigid housing segment (35) and the deformation segment (37) are manufactured from a single mono-component or multicomponent plastic material.

## Revendications

1. Unité modulaire, destinée à être montée sur une paroi d'installation (11), pourvue d'un ensemble encastrable et d'un boîtier encastrable (7) entourant l'ensemble encastrable, qui dans le cas d'un montage encastré est insérable dans une direction de profondeur de montage (y) dans un creux de montage (9) de la paroi d'installation (11), le boîtier encastrable (7) comportant une unité compensatrice (37), permettant de régler la hauteur globale (h) du boîtier encastrable (7) dans la direction de profondeur de montage (y), de telle sorte que lors du montage encastré, la hauteur globale (h) du boîtier encastrable (7) soit adaptable à une profondeur d'encastrement (Δy) du creux de montage (9) de la paroi d'installation (11),
le boîtier encastrable comportant une couronne d'étanchéité (29) qui dans la position de montage (I, II) du boîtier encastrable (7) recouvre une portion de paroi de la paroi d'installation (11) qui délimite sur le bord le creux de montage (9),
**caractérisée en ce que** la couronne d'étanchéité (29) est un élément constitutif séparé,
la couronne d'étanchéité (29) étant conçue sous la forme d'un non-tissé d'étanchéité et étant fixée au moyen d'un clips de fixation (41) sur la face extérieure sur le boîtier encastrable (7).

2. Unité modulaire selon la revendication 1, **caractérisée en ce que** l'unité compensatrice (37) est conçue dans une matière homogène ou en monobloc en tant que partie du boîtier encastrable (7), et/ou **en ce que** dans un plan perpendiculaire à la direction de profondeur de montage (y), l'unité compensatrice (37) est conçue sur sa périphérie en continu en tant que partie du boîtier encastrable (7).

3. Unité modulaire selon la revendication 1 ou 2, **caractérisée en ce que** l'unité compensatrice (37) est réalisée sous la forme d'un segment de déformation, qui est plastiquement déformable dans la direction de profondeur de montage (y) et **en ce que** notamment le segment de déformation, conjointement avec un segment de boîtier à composants rigides (35) dans la direction de profondeur de montage (y) forme le boîtier encastrable (7).

4. Unité modulaire selon la revendication 3, **caractérisée en ce que** le boîtier encastrable (7) comporte une portion de fixation (27), destinée à la fixation sur un fond de montage (23) du creux de montage (9), lequel fond de montage (23) est déporté vers l'arrière par rapport à la surface (25) de la paroi d'installation de la valeur de la profondeur d'encastrement (Δy) et **en ce que** la portion de fixation (27) est conçu sur le segment de boîtier à composants rigides (35) du boîtier encastrable (7).

5. Unité modulaire selon l'une quelconque des revendications précédentes, **caractérisée en ce que** l'unité compensatrice (37) est réalisée sous la forme d'un soufflet, qui est fermable ou déployable dans la direction de profondeur de montage (y).

6. Unité modulaire selon l'une quelconque des revendications 3 à 5, **caractérisée en ce que** le segment de boîtier à composants rigides (35) et le segment de déformation (37) sont fabriqués dans une matière homogène en une matière plastique monocomposant ou multicomposants.
